(19) **Europäisches Patentamt / European Patent Office / Office européen des brevets**

(11) **EP 4 291 871 B1**

(12) # EUROPEAN PATENT SPECIFICATION

(45) Date of publication and mention
of the grant of the patent:
**31.12.2025 Bulletin 2026/01**

(21) Application number: **22703678.7**

(22) Date of filing: **08.02.2022**

(51) International Patent Classification (IPC):
**G01N 17/00** (2006.01)   **G01N 17/04** (2006.01)
**G01N 27/04** (2006.01)

(52) Cooperative Patent Classification (CPC):
**G01N 17/043; G01N 17/006; G01N 27/041**

(86) International application number:
**PCT/EP2022/053014**

(87) International publication number:
**WO 2022/171628 (18.08.2022 Gazette 2022/33)**

(54) **METHOD FOR ESTIMATING CORROSION OF A PORTION OF A STRUCTURE**

VERFAHREN ZUR SCHÄTZUNG DER KORROSION EINES TEILS EINER STRUKTUR

PROCÉDÉ D'ESTIMATION DE LA CORROSION D'UNE PARTIE D'UNE STRUCTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.02.2021 EP 21382111**

(43) Date of publication of application:
**20.12.2023 Bulletin 2023/51**

(73) Proprietors:
• **Fundación Tecnalia Research & Innovation
20009 San Sebastián, Guipúzcoa (ES)**
• **Tecnologica Leioa Aie
28006 Madrid (ES)**

(72) Inventors:
• **JORCIN JEAN, Baptiste
20009 San Sebastián (ES)**

• **ALONSO VALDESUEIRO, Javier
20009 San Sebastián (ES)**
• **ÍÑIGO, Santos Pereda
48920 Portugalete (ES)**
• **EXPÓSITO VAQUERIZO, Aintzane
28006 Madrid (ES)**
• **ARREDONDO LÓPEZ DE GUEREÑU, Alberto
28006 Madrid (ES)**
• **MATIAS GARMENDIA, Onintze
28006 Madrid (ES)**

(74) Representative: **Balder IP Law, S.L.
Paseo de la Castellana 93
5ª planta
28046 Madrid (ES)**

(56) References cited:
**US-A1- 2006 002 815     US-A1- 2007 159 187
US-A1- 2019 224 510**

**Description**

**TECHNICAL FIELD**

The present invention relates to the field of methods for monitoring corrosion of a structure and, more particularly, to the field of methods for estimating corrosion of a portion of a structure submerged in water.

**STATE OF THE ART**

Different techniques for monitoring corrosion of structures provided in water are known in the art. Some of these techniques rely on an electrical resistance corrosion probe. This probe comprises an electrically conductive portion in contact with water. Due to the corroding effect of water on this portion, the electrical resistance of the probe changes. The change of electrical resistance can be measured and used to estimate the degree of corrosion of the portion of the probe.

A technique which uses an electrical resistance corrosion probe is disclosed in document US7034553B2. US7034553B2 discloses a probe comprising, at one of its ends, an electrically conductive metallic element. In addition, the probe comprises a meter for measuring the electrical resistance of the electrically conductive metallic element and control means for applying an electric current across the resistive electrically conductive metallic element. Thereby applying an electric current across the metallic element and measuring a change in the resistance of the element allows estimating a corrosion degree of the element.

However, the operating life of the electrical resistance probe of US7034553B2 is shorter than the operating life of many corrodible marine structures. Therefore, it would be desirable adjusting the life of the electrical resistance corrosion probe to the life of the structure. In addition, it would be desirable to enhance the precision of the measurement of the degree of corrosion.

On the other hand, EP1546679B1 discloses a microsensor unit for detecting localised corrosion on an aircraft due to a corrosive media. The microsensor unit comprises a substrate on which three corrosion microsensors are mounted. Each corrosion microsensor comprises electrically conductive corrodible tracks electrically connected in parallel. The tracks within each microsensor have the same dimensions and are scaled with respect to the tracks of the other two microsensors. By including the differently scaled sensors in a single microsensor unit the microsensor unit has several sensor outputs, derived from each sensor respectively, of different sensitivities to corrosion and with different sensor lifetimes. A sensor having a relatively small track width will be more sensitive but have a relatively small lifetime; the output from such a relatively small sensor may be used for monitoring corrosion during the early part of the life of the microsensor. Once the tracking of the relatively small sensor has degraded a sensor having a larger track width may be used to continue corrosion monitoring at a lower sensitivity during a subsequent period. Although this microsensor sensor unit is appropriate for detecting localised corrosion, e.g., exfoliation, intergranular, pitting, crevice or stress corrosion, the different corrosion degree of separated tracks of the same corrosion microsensor make the microsensor unit more prone to cause sudden changes on the corrosion detection value when the output is changed from one corrosion microsensor to another. In addition, a microsensor is not appropriate for detecting corrosion which is not localised but more generalized. The generalized corrosion is the kind of corrosion which frequently takes place under water. Since the corrosion mechanism of the generalized corrosion is different from the aforementioned localised corrosion mechanisms including exfoliation, intergranular, pitting, crevice or stress corrosion, a microsensor is not appropriate for monitoring the generalized corrosion. Moreover, the microsensors of EP1546679B1 relies on thin film corrodible tracks. A thin film is a coating having a thickness of less than just a few microns, limiting the longest possible lifetime of the microsensors of EP1546679B1 to just a few days if placed under marine water. Therefore, the microsensors of EP1546679B1 are inappropriate for monitoring corrosion along the whole operating life of marine structures which operate for several years.

Furthermore, US2019/224510 A1 describes monitoring corrosion by a a probe having wires of different thickness.

Therefore, it would be advantageous an electrical resistance corrosion probe which allows estimating a reduced thickness of a portion of a structure provided in water in a more precise manner and which allows an enhanced continuity in the monitoring of the thickness of the portion of the structure.

**DESCRIPTION OF THE INVENTION**

The present invention relates to a method for estimating corrosion of a portion of a structure, the portion being submerged in water, for example in salt water, and made of a first material, the first material being electrically conductive and corrodible in water. The method comprises:

- providing a first probe and a second probe submerged in water, the first probe comprising a layer of the first material having a first thickness and the second probe comprising a layer of the first material having a second thickness; such that electrical resistance of the first and second probes increases due to corrosion of the first material; and wherein the first thickness of the first material is lower than the second thickness of the first material;

- providing an electric current through the first thickness of the first material of the first probe and taking an electrical measurement of the first probe, the electrical measurement of the first probe allowing estimating the electrical resistance of the first probe;
- determining from the electrical measurement of the first probe whether the electrical resistance of the first probe is higher or lower than a first predefined value;
- if the electrical resistance of the first probe is higher than the first predefined value, performing steps of providing an electric current through the second thickness of the first material of the second probe and taking an electrical measurement of the second probe allowing estimating the electrical resistance of the second probe, and using the electrical measurement of the second probe for estimating a reduction of the thickness of the portion of the structure;
- if the electrical resistance of the first probe is lower than the first predefined value, performing a step of using the electrical measurement of the first probe for estimating a reduction of the thickness of the portion of the structure.

As any of the first and second thickness made of the first material corrodes, that thickness is reduced. In order to estimate the thickness reduction, an electric current may be applied in the direction perpendicular to the thickness. In this way, since the section crossed by the electric current is reduced, the electrical resistance of the probe increases according to the formula:

$$R = \rho x \frac{L}{S}$$

wherein:

R is an electrical resistance of a portion of the probe made of the first material;
$\rho$ is an electrical resistivity of the first material;
S is a section of the first material crossed by the electric current;
L is a length of the first material in a direction perpendicular to the section S.

Although the formula teaches that a change in the section S produces a change in the resistance R, the skilled in the art will understand that a change in the section S would also produce changes in other electrical parameters of the probe which may be measured such as a voltage of the probe and hence these other electrical parameters may be used in the method according to the present invention. Hence, the electrical resistance of the probe can be estimated from electrical measurements of the probe.

Since the submerged portion of the structure is located near the probes and both the portion of the structure and the probes are made of the same first material, the submerged portion of the structure and the probes are subjected to the same or very similar corrosion conditions and hence to very similar corrosion penetration. Therefore, the electrical measurement of the probes not only allows estimation of the reduction of thickness of the first material of the probes but also the reduction of thickness of the portion of the structure.

The minimum thickness reduction which can be detected by the first probe is lower than the minimum thickness reduction which can be detected by the second probe because the first thickness is lower, or in other words smaller, than the second thickness. In addition, the lower, or in other words smaller, first thickness allows using the first probe for estimating smaller thickness reductions because its electrical resistance range is more sensitive to the thickness reduction. However, the lower thickness also causes the operation life of the probe to be shorter when compared to a thicker thickness made of the same material and subjected to the same corrosive environment. Therefore, by using the second probe, having a larger second thickness or in other words thicker, the operation life can be extended.

By comparing the electrical resistance of the first probe with the first predefined value, it may be determined whether the first thickness is too small and hence has lost reliability for allowing estimating the first thickness from an electrical measurement of the first probe. Thereby, this comparison allows deciding the moment in which the thickness of the portion of the structure is estimated from an electrical measurement of the thicker second thickness. In this way, it is enhanced the continuity in the estimation of the reduction of thickness of the portion of the structure.

In some embodiments, the first predefined value is a value of the electrical resistance of the first probe wherein the first thickness is at least 25% and at most 50% of the first thickness initially submerged in water. As the first thickness of the first material corrodes, the first thickness decreases. In these embodiments, the predefined value is a value of the electrical resistance of the first probe upon reduction of the first thickness, due to corrosion, to between 25% and 50% of the first thickness initially submerged in water. This range has been found particularly advantageous for achieving a compromise between using the first probe a long time and not unduly risking reliability of the electrical measurements of the first probe for estimating a reduction of the first thickness.

In some embodiments the method comprises:

- determining whether the electrical resistance of the first probe is lower than a second predefined value; the second predefined value being higher than the first predefined value;
- if the electrical resistance of the first probe is lower than the second predefined value, performing the step of using the electrical measurement of the first probe for estimating a reduction of the thickness of the portion of the structure.

Thereby, there is a time range in which electrical measurements are taken from both the first probe and the second probe and the reduction of the thickness is estimated from both electrical measurements of both the first probe and the second probe. This allows further enhancing continuity in the estimation of the reduction of the thickness of the portion of the structure.

In some embodiments, the method comprises estimating a thickness reduction rate of the portion of the structure at a particular instant of time from the estimated reduction of the thickness of the portion of the structure at the particular instant of time. The rate can be calculated by using processing means for estimating the derivative of the reduction of the thickness with respect to time. For example, units of thickness reduction rate may be millimeters per year.

In some embodiments the estimation of the thickness reduction rate of the portion of the structure at a particular instant of time comprises applying a LOWESS function to estimated values of the reduction of thickness of the portion of the structure.

In some embodiments, the first and the second probes are introduced in the water at the same time. Thereby, since the second probe is near the first probe, the second probe inherits the corrosion effects to which the first probe has been subjected since the beginning of submersion of the first probe. In some of these embodiments the portion of the structure, the first probe and the second probe are introduced in the water at the same time. In this way both the first probe and the second probe inherit corrosion effects to which the portion of the structure has been subjected since the beginning of submersion of the portion of the structure.

In some embodiments, the value of the electric current provided through the first thickness is invariable with the corrosion of the first thickness. Thereby, although the first thickness decreases due to corrosion, the electric current supplied to the first thickness does not change. When compared to providing a constant voltage difference, providing an electric current which is invariable as the thickness gets reduced results advantageous because a temperature gradient in the probe is minimized and the consumption of energy of the probe is lower at the beginning of the corrosion of the probe.

In some embodiments, the electric current provided through the second thickness has the same value as the electric current provided through the first thickness. In these embodiments the electronics of the invention are simplified because the same PCB design can be used for each probe regardless of the thickness of the layer of the first material of each probe. Otherwise, ad-hoc electronics should be designed for each probe having a different thickness of the first material.

In some embodiments the method comprises the following steps:

- if the electrical resistance of the first probe is lower than the first predefined value:

    o measuring a temperature of the first probe, and
    o adjusting the estimation of the reduction of the thickness of the portion of the structure by using the measured temperature of the first probe and a relation between temperature of the first probe and an electrical parameter of the first probe; and

- if the electrical resistance of the first probe is higher than the first predefined value:

    o measuring a temperature of the second probe, and
    o adjusting the estimation of the reduction of the thickness of the portion of the structure by using the measured temperature of the second probe and a relation between temperature of the second probe and an electrical parameter of the second probe.

This estimation adjustment allows that changes of the temperature of the first and second probe are not erroneously attributed to changes of the first and second thickness. The temperature of the material affects electrical parameters of the material and hence electrical measurements of the material. Hence, changes in the electrical measurements of the probe are not caused only by a thickness reduction of the layer of the first material but also by temperature changes. Therefore, distinguishing between changes in the electrical parameter due to changes of the temperature of the probe and changes in the electrical parameter due to reduction of the thickness of the first material is advantageous for increasing precision of the estimation of the reduction of the first and second thickness of the first material. Thus, increasing precision of the estimation of the reduction of the thickness of the portion of the structure.

In some embodiments, the relation between temperature of one of the probes and an electrical parameter of the probe is defined through:

- before providing the probe in water, providing the probe in a chamber having 0% of relative humidity, the chamber having an adjustable temperature;
- adjusting the temperature of the chamber and measuring an electrical resistivity of the probe at different temperatures of the probe.

This way of determining the relation of the temperature of the first or second probe with the electrical parameter of the probe is advantageous because allows adjusting a relation between the electrical parameter and the temperature of the probe to the dimensions, shape and materials of the particular probe. Therefore, allowing an increase in precision of the estimation of the reduction of the thickness of the portion of the structure.

In some embodiments the relation between temperature of one of the probes and an electrical parameter of the probe is:

$$\rho = E0 + F0xT + G0xT^2$$

wherein:

$\rho$ is an estimated electrical resistivity of the probe at a temperature $T$;
$E0$, $F0$ and $G0$ are constant values; and
T is a temperature of the probe.

This relation between the electrical resistivity and the temperature is more precise than a linear relation between the electrical resistivity and the temperature, advantageously allowing an increase in the precision in the estimation of the reduction of thickness of the portion of the structure and, hence, in the thickness reduction rate of the portion of the structure.

In some embodiments the reduction of the thickness of the portion of the structure is estimated using:

$$th(t) = \sqrt{-\frac{bxc - Rcorr(t)xb + a}{c - Rcorr(t)}}$$

wherein:

$th(t)$ is an estimated thickness of the layer of the first material of one of the probes at time t;
$a, b$ and $c$ are constant values for the probe; and
$Rcorr(t)$ is a value of the electrical resistance of the probe at time $t$ or a value resulting from adjusting the value of the electrical resistance of the probe at time t through using a temperature of the probe at time $t$ and a relation between temperature of the probe and an electrical parameter of the probe according to the previous embodiments.

This relation allows estimating the thickness of the layer of the first material of the probe which remains uncorroded in a simple manner (e.g., consuming just a few computational resources) and achieving high precision. In this way, the reduction of thickness of the portion of the structure can be estimated quickly, consuming fewer power and with high precision.

In some embodiments the method comprises designing the first probe through:

- estimating a thickness reduction rate of the first material in water;
- determining a minimum change of electrical resistance being detectable;
- using the estimated thickness reduction rate for determining a value of minimum reduction of thickness of the first material;
- determining dimensions of the first probe such that a reduction in the first thickness of the first material of the first probe equal to the minimum reduction of thickness causes a change in the electrical resistance of the probe being at least the minimum change of electrical resistance.

In this manner the first probe is designed such that a certain minimum value of change rate of the first thickness is detectable at the beginning of the operating life of the first probe submerged in water.

In some embodiments the structure of the method is a mooring chain. Thereby, the method according to the present invention allows monitoring a thickness reduction of a structure, such as mooring chain, which operating life may be longer than ten years. In addition, the method allows said monitoring in a continuous manner during the whole operating life of the structure.

The different aspects and embodiments of the invention defined in the foregoing can be combined with one another, as long as they are compatible with each other.

Additional advantages and features of the invention will become apparent from the detailed description that follows and will be particularly pointed out in the appended claims.

## BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:

Figure 1A shows horizontal cross-sections of probes having different thickness of a first material for a method according to the present invention.

Figure 1B shows vertical cross-sections of the probes of figure 1A.

Figure 2 schematically illustrates a probe from which an electrical measurement is being taken.

Figure 3 is a graph showing a relationship between electrical resistance of a probe and thickness reduction of the probe in a method according to the present invention.

Figure 4 shows a variation of thickness of a probe according to a method of the present invention.

Figure 5 is a flowchart of steps for defining a geometry of a probe for a method according to the present invention.

Figure 6 is a flowchart of steps for estimating sensitivity of electrical resistance of a probe with respect to temperature changes according to a method of the present invention.

Figure 7 is a flowchart of steps for obtaining a simple relationship between electrical resistance, temperature and corroded thickness according to a method of the present invention

Figure 8 is a flowchart of steps for calculating a corrosion penetration rate according to a method of the present invention.

## DETAILED DESCRIPTION OF EMBODIMENTS

The following description is not to be taken in a limiting sense but is given solely for the purpose of describing the broad principles of the invention. Embodiments of the invention will be described by way of example, with reference to the above-mentioned drawings.

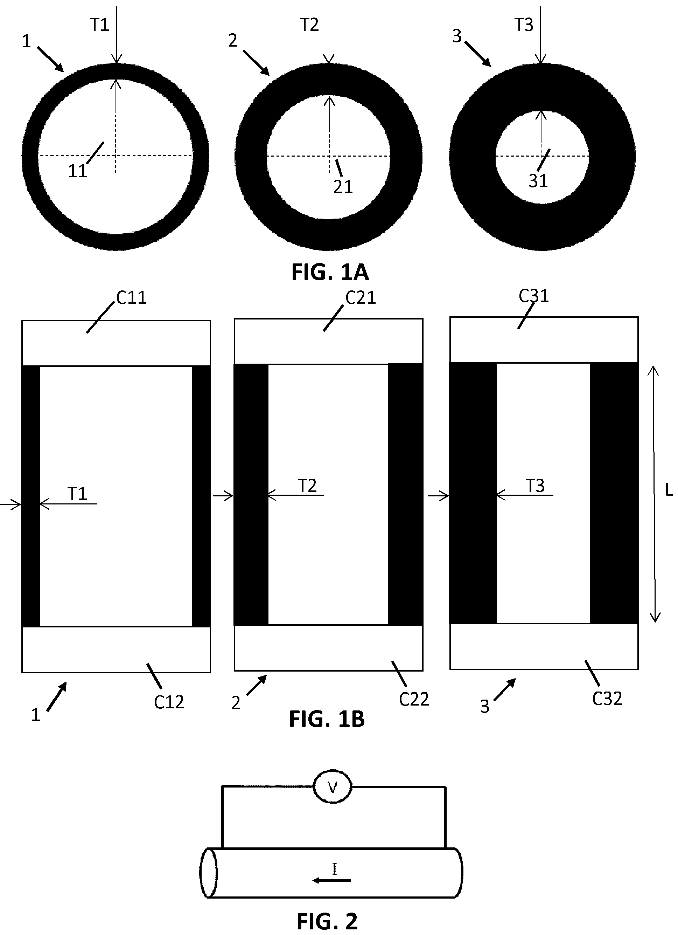

Figure 1A shows cross-sections of a first electrical resistance corrosion probe 1, a second electrical resistance corrosion probe 2 and a third electrical resistance corrosion probe 3, each probe having a cylindrical shape. The first probe 1 has a layer of a first material having a first thickness T1, wherein the first material is electrically conductive and corrodible in water. The second probe 2 has a layer of the first material having a second thickness T2, the second thickness T2 being higher, or in other words thicker or larger, than the first thickness T1. The third probe 3 has a layer of the first material having a third thickness T3, the third thickness T3 being higher, or in other words thicker or larger than the second thickness T2. An example of the first material is a low-alloy steel.

The first probe 1 has an interior portion 11 made of a polymeric sealant, such as silicone, which electrically insulates the interior portion 11 from the first thickness T1. In the same way, the second probe 2 has an interior portion 21 made of a polymeric sealant which electrically insulates the interior portion 21 from the second thickness T2. In the same manner, the third probe 3 has an interior portion 31 made of a polymeric sealant which electrically insulates the interior portion 31 from the third thickness T3.

Figure 1B shows that each probe 1, 2, 3 has two corrosion protectors C11, C12, C21, C22, C31, C32 which protect the top and bottom of the probes, such that corrosion progresses in the direction of the thickness T1, T2, T3 of each probe 1, 2, 3.

Figure 2 illustrates how electrical resistance of the first, second or third probe 1, 2, 3 can be measured. In order to estimate the reduction of the first, second or third thickness T1, T2, T3 of the first, second or third probe 1, 2, 3 respectively, an electric current I is provided in the longitudinal direction of the probe 1, 2, 3. The voltage V produced by the electric current I in the longitudinal direction of the probe is measured. Then, the electrical resistance of the probe is calculated by dividing the voltage V by the electric current I according to Ohm's law. This measurement of electrical resistance can be used for estimating a reduction of the thickness of the portion of the structure as described below.

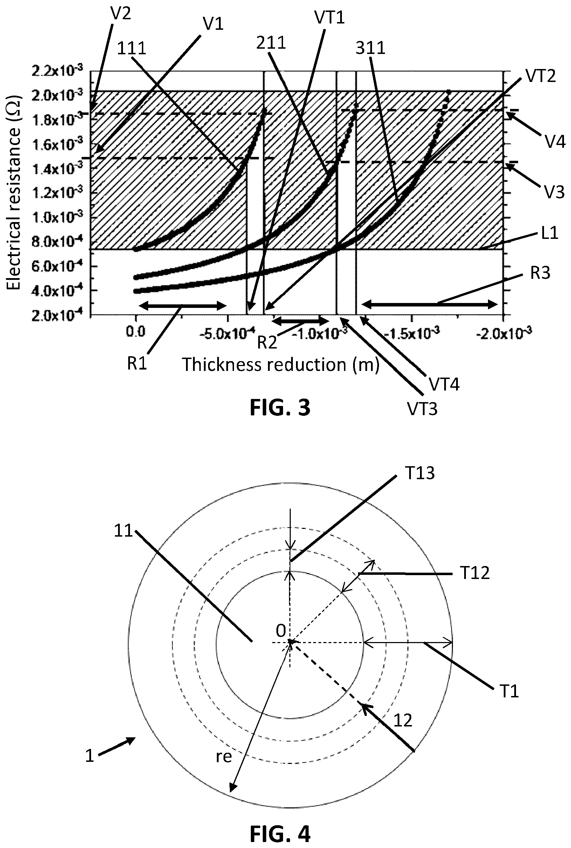

Figure 1A illustrates the first, second and third thickness T1, T2, T3 just before submerging the first, second and third probes 1, 2, 3 in water near the portion of the structure which corrosion is monitored. This moment corresponds to the point of the graph of figure 3 in which thickness reduction is zero. At that point, the first, second and third probes 1, 2, 3 have just been submerged in water and their electrical resistance and the first, second and third thickness T1, T2, T3 subsequently changes as illustrated in figure 3.

In particular, the correlation between change of electrical resistance of the first probe 1 and reduction of the first thickness T1 is described by line 111. The correlation between change of electrical resistance of the second probe 2 and reduction of the second thickness T2 is described by line 211. The correlation between change of electrical resistance of the third probe 3 and reduction of the third thickness T3 is described by line 311. Line L1 defines the minimum electrical resistance of a probe which may be reliably measured due to technical limitation of the electronics.

Figure 3 shows that the electrical resistance range of the first probe 1 is more sensitive to reduction of the first thickness T1 at the beginning because for the same thickness reduction for the three probes 1, 2, 3, the change of electrical resistance of the first probe 1 is higher than the change of electrical resistance of the second and third probes 2, 3. This is illustrated in the first region R1 of figure 3. In region R1, the thickness reduction of the portion of the structure is estimated by using the measurement of electrical resistance of the first probe 1.

When the electrical resistance of the first probe 1 reaches a first predefined value V1, the reduction of the first thickness T1 is of a value VT1 and the second probe 2 reaches an electrical resistance which is higher than the minimum electrical resistance value L1 reliably measurable by the electronics. After the electrical resistance of the first probe 1 reaches the first predefined value V1, the reduction of the thickness of the portion of the structure is estimated by using the measurement of electrical resistance of the second probe 2. In the region between an electrical resistance of the first probe 1 of the first predefined value V1 and an electrical resistance of the first probe 1 of a second predefined value V2, respectively corresponding to a thickness reduction value VT1 and to a thickness reduction value VT2, the thickness reduction of the portion of the structure may be estimated by using the measurement of electrical resistance of the first probe 1 and the measurement of electrical resistance of the second probe 2.

In the second region R2 the reduction of the second thickness T2 is between the value VT2 and the value VT3. In the second region R2, the thickness reduction of the portion of the structure is estimated by using the measurement of electrical resistance of the second probe 2 and without using the electrical resistance of the first probe 1. When the electrical resistance of the second probe 2 reaches a third predefined value V3, the reduction of the second thickness T2 is of a value VT3 and the third probe 3 reaches an electrical resistance which is higher than the minimum electrical resistance value L1 reliably measurable by the electronics. After the electrical resistance of the second probe 2 reaches the third predefined value V3, the reduction of the thickness of the portion of the structure is estimated by using the measurement of electrical resistance of the third probe 3. In the region between an electrical resistance of the second probe 2 of the third predefined value V3 and an electrical resistance of the second probe 2 of a fourth predefined value V4, respectively corresponding to a thickness reduction value VT3 and to a thickness reduction value VT4, the thickness reduction of the portion of the structure may be estimated by using the measurement of electrical resistance of the second probe 2 and the measurement of electrical resistance of the third probe 3.

In the third region R3, the thickness reduction is higher than the thickness reduction value VT4 and the thickness reduction of the portion of the structure is estimated by using the measurement of electrical resistance of the third probe 3 without using measurements of electrical resistance of any of the first and second probes 1, 2.

Figure 4 illustrates the first thickness T1 initially provided in water, a first reduced thickness T12 and a second reduced thickness T13. The first reduced thickness T12 is half the first thickness T1 initially provided in water. The second reduced thickness T13 is a quarter of the first thickness T1 initially provided in water. The thickness T1 initially provided in water minus the thickness reduction value VT1 results in a reduced thickness of the first probe 1 between the second reduced thickness T13 and the first reduced thickness T12 of the first probe 1. When a probe has a cylindrical shape, corrosion of the probe causes a decrease of the thickness of the first material in the radial direction 12 of the probe.

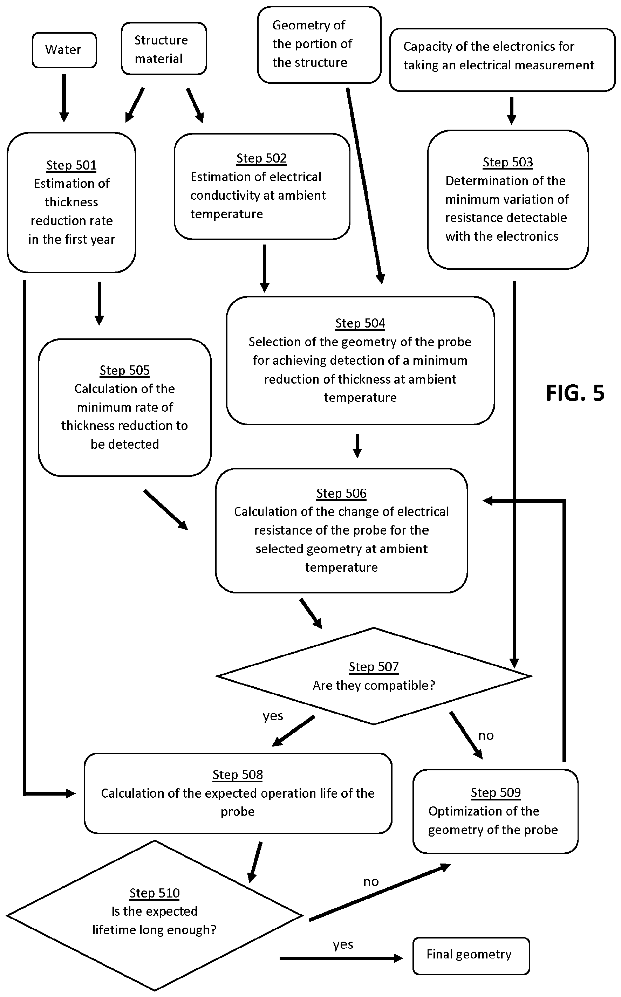

For defining the geometry of a probe, the steps of figure 5 may be followed. In the definition of the geometry several features are considered. One of the features is the water in which the portion of the structure is submerged and another feature is the first material. The corrosive effect of water is dependent on several factors such as temperature of the water, biofouling, concentration of oxygen in the water, pH of the water or salinity of the water. In addition, the same water causes different corrosive effects on different materials and hence the first material is also considered for performing step 501 of estimating a thickness reduction rate of the first material for the first year submerged in the water. From this estimation, in step 505 it is calculated the minimum rate of thickness reduction of the first material which is to be detected. A higher minimum rate of thickness reduction to be detected allows quicker detection of corrosion changes.

In step 502, it is estimated the electrical conductivity of the first material at ambient temperature. In step 504 it is chosen a geometry of the probe so that upon a predefined minimum reduction of thickness of the layer of the first material of the probe, the minimum reduction of thickness is expected to be correlated with a change in the electrical resistance of the probe at ambient temperature. In the selection of the geometry of the probe, the geometry of the portion of the structure may also be considered for increasing similarity between the geometry of the probe and the geometry of the portion of the structure and hence enhancing similarity between corrosion of the probe and corrosion of the portion of the structure. In step 506 it is calculated the change of electrical resistance of the probe having the geometry chosen in step 504, at ambient temperature and caused by the minimum rate of thickness reduction calculated in step 505.

In step 507 it is determined whether the electronics are capable of measuring the change of electrical resistance calculated in step 506, and hence if the electronics are compatible with the chosen geometry of the probe. For example, certain electronics are not compatible in the sense that they are not be capable of measuring too low values of electrical resistance of a probe. If in step 507 it is determined that the electronics are not compatible, the geometry of the probe is optimized in step 509. Then steps 506 and 507 are repeated until it is determined that the electronics are compatible with the chosen geometry of the probe.

If the electronics are compatible with the geometry of the probe, step 508 is performed. In step 508 it is calculated the expected operation life of the probe submerged in the water. If it is considered that the expected operation life of the probe is too low compared to the operation life of the structure, the geometry of the probe is optimized in step 509, and steps 506, 507, 508, 509 and 510 are repeated until the operation life of the probe is long enough. If the expected operation life of the probe is long enough, then the geometry of the probe is the definitive geometry.

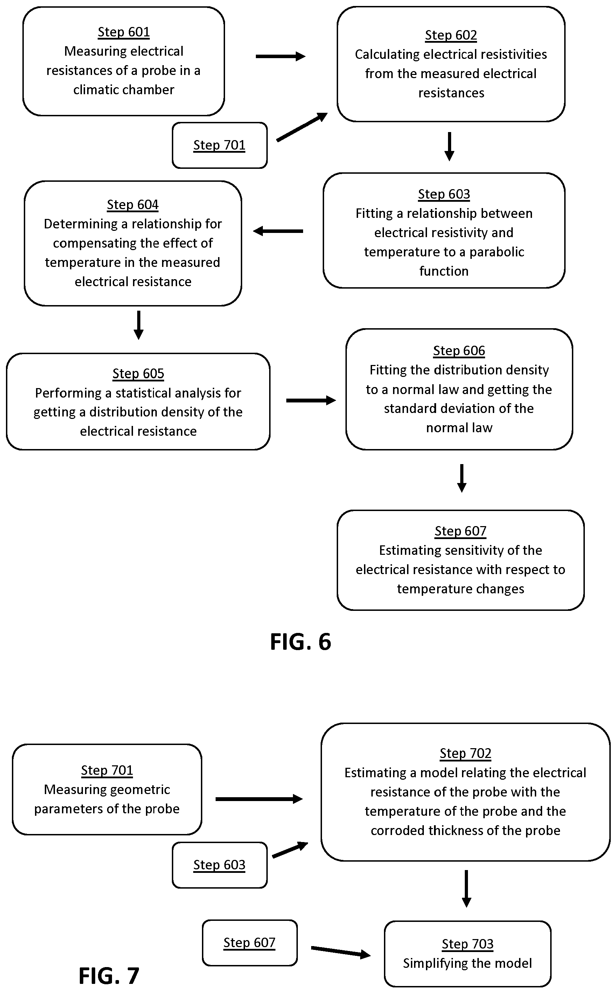

Figure 6 illustrates a calibration process in which it is estimated the sensitivity of the electrical resistance of a probe with respect to changes of temperature of the probe. In step 601 a probe of known geometry is provided in a climatic chamber. The temperature of the climatic chamber is adjusted and the electrical resistance of the probe is measured for different temperatures of the probe. In step 602 a value of electrical resistivity is calculated for each measurement of electrical resistance by using the measurements of electrical resistance and the known geometry of the probe, resulting in a relationship between values of electrical resistivity of the probe and the temperature of the probe. In step 603 the relationship between electrical resistivity and temperature is fitted to a quadratic function of the temperature:

$$\rho = E0 + F0xT + G0xT^2$$

wherein:

$\rho$ is an estimated electrical resistivity of the probe at a temperature $T$;
E0, F0 and G0 are constant values for the particular probe; and
T is a temperature of the probe.

In step 604 it is determined, by using the quadratic function of step 603, a relationship for compensating the effect of temperature in the measured electrical resistance:

$$Rcorr(t) = Rmeas(t) - \frac{Lx[(T(t)x(G0xT(t) + F0) - T(ref)x(G0xT(ref) + F0)]}{S}$$

wherein:

*Rcorr(t)* is an electrical resistance of the probe measured at time t and adjusted such that changes of the temperature of the probe are not erroneously attributed to changes of thickness of the layer of the first material;
*Rmeas*(t) is an electrical resistance of the probe measured at time t;
*E*0, *F*0 and *G*0 are the constant values of the quadratic function of the temperature of step 603; and
*T*(*t*) is a temperature of the probe at time t;
*T*(*ref*) is a temperature of reference;
*L* is the length of the layer of the first material of the probe (e.g., length L shown in figure 1B); and
*S* is the area of a transversal section of the probe made of the first material and before the probe is submerged in water (e.g. the area shown in figure 1A).

Then, in step 605 a distribution density of the electrical resistance around a mean value is obtained from the relationship for compensating the effect of temperature determined in step 604. In step 606 the distribution density is fit to a normal law, getting the standard deviation of the normal law. Finally, in step 607 the sensitivity of the electrical resistance to the temperature is estimated from the standard deviation of the normal law, for example selecting a sensitivity equal to three times the standard deviation of the normal law.

Figure 7 shows preparation steps for estimating a model which relates the electrical resistance of a probe with the thickness of the layer of the first material of the probe. In step 701 geometric parameters of the probe which relate electrical resistance of the probe and resistivity of the probe are measured. In step 702 it is estimated a model relating the electrical resistance of the probe with the quadratic function resulting from step 603, the geometric parameters measured in step 701 and the reduced thickness of the layer of the first material of the probe:

$$Rtot = (G0xT^2 + F0xT + E0)x \, f(geometric \, parameters, reduced \, thickness)$$

wherein:

Rtot is the electrical resistance of the probe;

$G0 \cdot T^2 + F0 \cdot T + E0$ is the quadratic function resulting from step 603;

f(geometric parameters, reduced thickness) is a function of the geometric parameters of the probe and the reduced thickness of the layer of the first material of the probe.

In step 703 the model estimated in step 702 is simplified to the following model using the sensitivity estimated in step 607:

$$Rcorr = f(reduced \, thickness, a, b, c)$$

wherein:

Rcorr is the electrical resistance of the probe adjusted such that changes of the temperature of the probe are not erroneously attributed to changes of the thickness of the layer of the first material probe;

reduced thickness is the reduced thickness of the layer of the first material of the probe;

a, b, c are constant values for the particular probe.

In particular, a model which provides particularly precise estimations for the cylindrical probe having the geometry illustrated in figure 4 is:

$$Rcorr(t) = \frac{a}{(re(t))^2 - b} + c$$

wherein re(t), illustrated in figure 4, is the radius of the probe at time t.

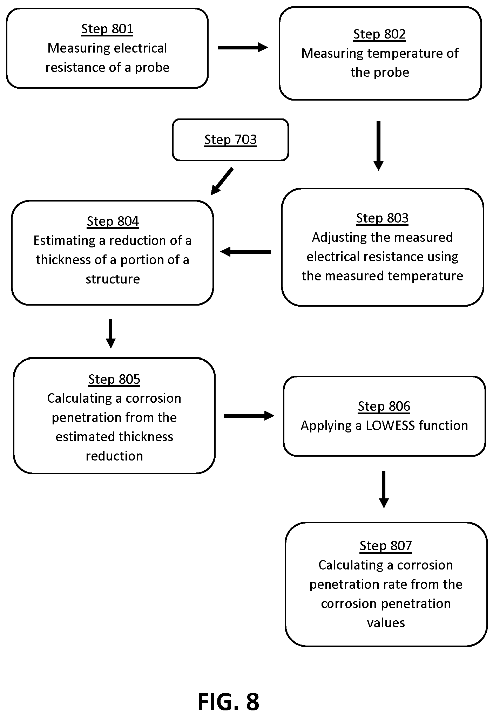

Figure 8 shows steps for operating a probe in order to estimate thickness reduction of the portion of the structure submerged in water. In step 801 the electrical resistance of the probe submerged in water is measured. In step 802 the temperature of the probe submerged in water is measured. In step 803 the measured electrical resistance of the probe is adjusted using the quadratic function resulting from step 603 such that changes of the temperature of the probe are not erroneously attributed to changes of the thickness of the probe. In step 804 a reduced thickness of the probe is estimated using the model resulting from step 703:

$$reduced \, thickness = f(a, b, c, Rcorr)$$

wherein:

reduced tickness is the reduced thickness of the layer of the first material of the probe;

a, b, c are the constant values of the model resulting from step 703;

$R_{corr}$ is the electrical resistance of the probe adjusted such that changes of the temperature of the probe are not erroneously attributed to changes of the thickness of the layer of the first material of the probe.

In particular, a model which provides particularly precise estimations is:

$$re(t) = \sqrt{-\frac{bxc - Rcorr(t)xb + a}{c - Rcorr(t)}}$$

wherein re(t) is the radius of the probe at time t.

The thickness reduction of the portion of the structure is considered to be similar to the thickness reduction of the layer of the first material of the probe, since the portion of the structure is near the probe.

In step 805 corrosion penetration, or in other words thickness reduction, is calculated by subtracting the reduced thickness estimated in step 804 from the initial thickness of the layer of the first material of the probe, i.e., from the thickness of the layer of the first material that the probe has before submerging the probe. In step 806 the corrosion penetration calculated in step 805, together with values of corrosion penetration obtained earlier, are filtered by applying a LOWESS (locally weighted scatterplot smoothing) function in order to minimize noise of the values of corrosion penetration. In step 807 a corrosion penetration rate is calculated using the corrosion penetration values filtered in step 806, for example by calculating a time derivative of the filtered corrosion penetration values.

Although the detailed description of the embodiments only shows tubular probes. The skilled in the art in electrical resistance corrosion probes will understand that many other shapes are possible.

In this text, the term "comprises" and its derivations (such as "comprising", etc.) should not be understood in an excluding sense, that is, these terms should not be interpreted as excluding the possibility that what is described and defined may include further elements, steps, etc.

### Claims

1. A method for estimating corrosion of a portion of a structure, the portion being submerged in water and made of a first material, the first material being electrically conductive and corrodible in water; the method comprising:

   - providing a first probe (1) and a second probe (2) submerged in water, the first probe (1) comprising a layer of the first material having a first thickness and the second probe (2) comprising a layer of the first material having a second thickness; such that electrical resistance of the first and second probes (1, 2) increases due to corrosion of the first material; and wherein the first thickness of the first material is lower than the second thickness of the first material;
   - providing an electric current through the first thickness of the first material of the first probe (1) and taking an electrical measurement of the first probe (1), the electrical measurement of the first probe (1) allowing estimating the electrical resistance of the first probe (1); and further **characterised by**
   - determining from the electrical measurement of the first probe (1) whether the electrical resistance of the first probe (1) is higher or lower than a first predefined value (V1);
   - if the electrical resistance of the first probe (1) is higher than the first predefined value (V1), performing steps of providing an electric current through the second thickness of the first material of the second probe (2) and taking an electrical measurement of the second probe (2) allowing estimating the electrical resistance of the second probe (2), and using the electrical measurement of the second probe (2) for estimating a reduction of the thickness of the portion of the structure;
   - if the electrical resistance of the first probe (1) is lower than the first predefined value (V1), performing a step of using the electrical measurement of the first probe (1) for estimating a reduction of the thickness of the portion of the structure.

2. A method according to claim 1, wherein the first predefined value (V1) is a value of the electrical resistance of the first probe (1) wherein the first thickness is at least 25% and at most 50% of the first thickness initially submerged in water.

3. A method according to any one of the previous claims, comprising:

   - determining whether the electrical resistance of the first probe (1) is lower than a second predefined value (V2); the second predefined value (V2) being higher than the first predefined value (V1);
   - if the electrical resistance of the first probe (1) is lower than the second predefined value (V2), performing the step of using the electrical measurement of the first probe (1) for estimating a reduction of the thickness of the portion of the structure.

4. A method according to any one of the previous claims, comprising estimating a thickness reduction rate of the portion of the structure at a particular instant of time from the estimated reduction of the thickness of the portion of the structure at the particular instant of time.

5. A method according to claim 4 wherein the estimation of the thickness reduction rate of the portion of the structure at a particular instant of time comprises applying a LOWESS function to estimated values of the reduction of thickness of the portion of the structure.

6. A method according to any one of the previous claims, wherein the first and the second probes (1, 2) are introduced in the water at the same time.

7. A method according to any one of the previous claims, wherein the value of the electric current provided through the first thickness is invariable with the corrosion of the first thickness.

8. A method according to claim 7, wherein the electric current provided through the second thickness has the same value as the electric current provided through the first thickness.

9. A method according to any one of the previous claims, comprising:

- if the electrical resistance of the first probe (1) is lower than the first predefined value (V1):

o measuring a temperature of the first probe (1), and
o adjusting the estimation of the reduction of the thickness of the portion of the structure by using the measured temperature and a relation between temperature of the first probe (1) and an electrical parameter of the first probe (1); and

- if the electrical resistance of the first probe (1) is higher than the first predefined value (V1):

○ measuring a temperature of the second probe (2), and
○ adjusting the estimation of the reduction of the thickness of the portion of the structure by using the measured temperature and a relation between temperature of the second probe (2) and an electrical parameter of the second probe (2).

10. A method according to claim 9, wherein the relation between temperature of one of the probes (1, 2) and an electrical parameter of the probe is defined through:

- before providing the probe in water, providing the probe in a chamber having 0% of relative humidity, the chamber having an adjustable temperature;
- adjusting the temperature of the chamber and measuring an electrical resistivity of the probe at different temperatures of the probe.

11. A method according to any one of claims 9 and 10, wherein the relation between temperature of one of the probes (1, 2) and an electrical parameter of the probe is:

$$\rho = E0 + F0xT + G0xT^2$$

wherein:

$\rho$ is an estimated electrical resistivity of the probe at a temperature $T$;
$E0$, $F0$ and $G0$ are constant values; and
T is a temperature of the probe.

12. A method according to any one of claims 9 to 11, wherein the reduction of the thickness of the portion of the structure is estimated using:

$$th(t) = \sqrt{-\frac{bxc - Rcorr(t)xb + a}{c - Rcorr(t)}}$$

wherein:

$th(t)$ is an estimated thickness of the layer of the first material of one of the probes at time $t$;
$a, b$ and $c$ are constant values for the probe; and
$Rcorr(t)$ is a value of the electrical resistance of the probe at time $t$ or a value resulting from adjusting the value of the electrical resistance of the probe at time t through using a temperature of the probe at time t and a relation between temperature of the probe and an electrical parameter of the probe according to any one of claims 9 to 11.

13. A method according to any one of the previous claims, comprising designing the first probe through:

- estimating a thickness reduction rate of the first material in water;
- determining a minimum change of electrical resistance being detectable;
- using the estimated thickness reduction rate for determining a value of minimum reduction of thickness of the first material;
- determining dimensions of the first probe such that a reduction in the first thickness of the first material of the first probe equal to the minimum reduction of thickness causes a change in the electrical resistance of the probe being at least the minimum change of electrical resistance.

14. A method according to any one of the previous claims, wherein the structure is a mooring chain.

**Patentansprüche**

1. Verfahren zur Abschätzung der Korrosion eines Abschnitts einer Struktur, wobei der Abschnitt im Wasser eingetaucht ist und aus einem ersten Material besteht, wobei das erste Material elektrisch leitfähig und im Wasser korrodierbar ist; wobei das Verfahren umfasst:

- Bereitstellen einer ersten Sonde (1) und einer zweiten Sonde (2), die im Wasser eingetaucht sind, wobei die erste Sonde (1) eine Schicht des ersten Materials mit einer ersten Dicke umfasst und die zweite Sonde (2) eine Schicht des ersten Materials mit einer zweiten Dicke umfasst; derart, dass der elektrische Widerstand der ersten und zweiten Sonden (1, 2) aufgrund der Korrosion des ersten Materials zunimmt; und wobei die erste Dicke des ersten Materials geringer ist als die zweite Dicke des ersten Materials;
- Anlegen eines elektrischen Stroms durch die erste Dicke des ersten Materials der ersten Sonde (1) und Durchführen einer elektrischen Messung der ersten Sonde (1), wobei die elektrische Messung der ersten Sonde (1) die Abschätzung des elektrischen Widerstands der ersten Sonde (1) ermöglicht; und ferner **gekennzeichnet durch**
- Bestimmen anhand der elektrischen Messung der ersten Sonde (1), ob der elektrische Widerstand der ersten Sonde (1) höher oder niedriger als ein erster vorbestimmter Wert (V1) ist;
- falls der elektrische Widerstand der ersten Sonde (1) höher als der erste vorbestimmte Wert (V1) ist, Durchführen der Schritte des Anlegens eines elektrischen Stroms durch die zweite Dicke des ersten Materials der zweiten Sonde (2) und Durchführen einer elektrischen Messung der zweiten Sonde (2), wodurch die Abschätzung des elektrischen Widerstands der zweiten Sonde (2) ermöglicht wird, und Verwenden der elektrischen Messung der zweiten Sonde (2) zur Abschätzung einer Verringerung der Dicke des Abschnitts der Struktur;
- falls der elektrische Widerstand der ersten Sonde (1) niedriger als der erste vorbestimmte Wert (V1) ist, Durchführen des Schritts des Verwendens der elektrischen Messung der ersten Sonde (1) zur Abschätzung einer Verringerung der Dicke des Abschnitts der Struktur.

2. Verfahren nach Anspruch 1, wobei der erste vorbestimmte Wert (V1) ein Wert des elektrischen Widerstands der ersten Sonde (1) ist, bei dem die erste Dicke mindestens 25 % und höchstens 50 % der ursprünglich im Wasser eingetauchten ersten Dicke beträgt.

3. Verfahren nach einem der vorhergehenden Ansprüche, umfassend:

- Bestimmen, ob der elektrische Widerstand der ersten Sonde (1) niedriger als ein zweiter vorbestimmter Wert (V2) ist; wobei der zweite vorbestimmte Wert (V2) höher ist als der erste vorbestimmte Wert (V1);
- falls der elektrische Widerstand der ersten Sonde (1) niedriger als der zweite vorbestimmte Wert (V2) ist, Durchführen des Schritts des Verwendens der elektrischen Messung der ersten Sonde (1) zur Abschätzung einer Verringerung der Dicke des Abschnitts der Struktur.

4. Verfahren nach einem der vorhergehenden Ansprüche, umfassend das Abschätzen einer Dickenreduktionsrate des Abschnitts der Struktur zu einem bestimmten Zeitpunkt aus der abgeschätzten Verringerung der Dicke des Abschnitts der Struktur zu dem bestimmten Zeitpunkt.

5. Verfahren nach Anspruch 4, wobei die Abschätzung der Dickenreduktionsrate des Abschnitts der Struktur zu einem bestimmten Zeitpunkt das Anwenden einer LOWESS Funktion auf abgeschätzte Werte der Dickenreduzierung des Abschnitts der Struktur umfasst.

**6.** Verfahren nach einem der vorhergehenden Ansprüche, wobei die erste und die zweite Sonde (1, 2) gleichzeitig in das Wasser eingebracht werden.

**7.** Verfahren nach einem der vorhergehenden Ansprüche, wobei der Wert des elektrischen Stroms, der durch die erste Dicke geleitet wird, unveränderlich mit der Korrosion der ersten Dicke ist.

**8.** Verfahren nach Anspruch 7, wobei der elektrische Strom, der durch die zweite Dicke geleitet wird, denselben Wert hat wie der elektrische Strom, der durch die erste Dicke geleitet wird.

**9.** Verfahren nach einem der vorhergehenden Ansprüche, umfassend:

- falls der elektrische Widerstand der ersten Sonde (1) niedriger als der erste vorbestimmte Wert (V1) ist:

◦ Messen einer Temperatur der ersten Sonde (1), und
◦ Anpassen der Abschätzung der Verringerung der Dicke des Abschnitts der Struktur unter Verwendung der gemessenen Temperatur und einer Beziehung zwischen der Temperatur der ersten Sonde (1) und einem elektrischen Parameter der ersten Sonde (1); und

- falls der elektrische Widerstand der ersten Sonde (1) höher als der erste vorbestimmte Wert (V1) ist:

◦ Messen einer Temperatur der zweiten Sonde (2), und
◦ Anpassen der Abschätzung der Verringerung der Dicke des Abschnitts der Struktur unter Verwendung der gemessenen Temperatur und einer Beziehung zwischen der Temperatur der zweiten Sonde (2) und einem elektrischen Parameter der zweiten Sonde (2).

**10.** Verfahren nach Anspruch 9, wobei die Beziehung zwischen der Temperatur einer der Sonden (1, 2) und einem elektrischen Parameter der Sonde definiert ist durch:

- vor dem Einbringen der Sonde in Wasser, Einbringen der Sonde in eine Kammer mit 0 % relativer Luftfeuchtigkeit, wobei die Kammer eine einstellbare Temperatur aufweist;
- Einstellen der Temperatur der Kammer und Messen einer elektrischen Resistivität der Sonde bei unterschiedlichen Temperaturen der Sonde.

**11.** Verfahren nach einem der Ansprüche 9 oder 10, wobei die Beziehung

zwischen der Temperatur einer der Sonden (1, 2) und einem elektrischen Parameter der Sonde ist:

$$\rho = E0 + F0xT + G0xT^2$$

wobei:
$\rho$ eine abgeschätzte elektrische Resistivität der Sonde bei einer Temperatur T ist;
*E0, F0 und G0* konstante Werte sind; und
*T* eine Temperatur der Sonde ist.

**12.** Verfahren nach einem der Ansprüche 9 bis 11, wobei die Verringerung der Dicke des Abschnitts der Struktur unter Verwendung von

$$th(t) = \sqrt{-\frac{bxc - Rcorr(t)xb + a}{c - Rcorr(t)}}$$

abgeschätzt wird,
wobei: *th(t)* eine abgeschätzte Dicke der Schicht des ersten Materials einer der Sonden zu einem Zeitpunkt t ist;
*a, b und c* konstante Werte für die Sonde sind; und
*Rcorr(t)* ein Wert des elektrischen Widerstands der Sonde zu einem Zeitpunkt *t* ist oder ein Wert, der sich aus der Anpassung des Werts des elektrischen Widerstands der Sonde zu einem Zeitpunkt t unter Verwendung einer Temperatur der Sonde zu einem Zeitpunkt t und einer Beziehung zwischen der Temperatur der Sonde und einem elektrischen Parameter der Sonde gemäß einem der Ansprüche 9 bis 11 ergibt.

13. Verfahren nach einem der vorhergehenden Ansprüche, umfassend das Auslegen der ersten Sonde durch:

- Abschätzen einer Dickenreduktionsrate des ersten Materiau im Wasser;
- Bestimmen einer minimalen Änderung des elektrischen Widerstands, die nachweisbar ist;
- Verwenden der abgeschätzten Dickenreduktionsrate zur Bestimmung eines Werts der minimalen Dickenreduzierung des ersten Materials;
- Bestimmen der Abmessungen der ersten Sonde derart, dass eine Verringerung der ersten Dicke des ersten Materials der ersten Sonde, die der minimalen Dickenreduzierung entspricht, eine Änderung des elektrischen Widerstands der Sonde verursacht, die mindestens der minimalen Änderung des elektrischen Widerstands entspricht.

14. Verfahren nach einem der vorhergehenden Ansprüche, wobei die Struktur eine Ankerkette ist.


**Revendications**

1. Procédé pour estimer de la corrosion d'une portion d'une structure, la portion étant immergée dans l'eau et constituée d'un premier matériau, le premier matériau étant électriquement conducteur et corrodable dans l'eau ; le procédé comprenant les étapes consistant à :

   • fournir une première sonde (1) et une seconde sonde (2) immergées dans l'eau, la première sonde (1) comprenant une couche du premier matériau ayant une première épaisseur et la seconde sonde (2) comprenant une couche du premier matériau ayant une seconde épaisseur ; de telle sorte que la résistance électrique de la première et de la seconde sonde (1, 2) augmente en raison de la corrosion du premier matériau ; et la première épaisseur du premier matériau étant inférieure à la seconde épaisseur du premier matériau ;
   • fournir un courant électrique à travers la première épaisseur du premier matériau de la première sonde (1) et à réaliser une mesure électrique de la première sonde (1), la mesure électrique de la première sonde (1) permettant d'estimer la résistance électrique de la première sonde (1) ; et étant en outre **caractérisé par** les étapes consistant à :
   • déterminer, à partir de la mesure électrique de la première sonde (1), si la résistance électrique de la première sonde (1) est supérieure ou inférieure à une première valeur prédéfinie (V1) ;
   • si la résistance électrique de la première sonde (1) est supérieure à la première valeur prédéfinie (V1), réaliser les étapes consistant à fournir un courant électrique à travers la seconde épaisseur du premier matériau de la seconde sonde (2) et à réaliser une mesure électrique de la seconde sonde (2) permettant d'estimer la résistance électrique de la seconde sonde (2), et utiliser la mesure électrique de la seconde sonde (2) pour estimer une réduction de l'épaisseur de la portion de la structure ;
   • si la résistance électrique de la première sonde (1) est inférieure à la première valeur prédéfinie (V1), réaliser une étape consistant à utiliser la mesure électrique de la première sonde (1) pour estimer une réduction de l'épaisseur de la portion de la structure.

2. Procédé selon la revendication 1, dans lequel la première valeur prédéfinie (V1) est une valeur de la résistance électrique de la première sonde (1), la première épaisseur valant au moins 25 % et au plus 50 % de la première épaisseur initialement immergée dans l'eau.

3. Procédé selon l'une quelconque des revendications précédentes, comprenant les étapes consistant à :

   • déterminer si la résistance électrique de la première sonde (1) est inférieure à une seconde valeur prédéfinie (V2), la seconde valeur prédéfinie (V2) étant supérieure à la première valeur prédéfinie (V1) ;
   • si la résistance électrique de la première sonde (1) est inférieure à la seconde valeur prédéfinie (V2), réaliser l'étape consistant à utiliser la mesure électrique de la première sonde (1) pour estimer une réduction de l'épaisseur de la portion de la structure.

4. Procédé selon l'une quelconque des revendications précédentes, comprenant l'étape consistant à déterminer un taux de réduction d'épaisseur de la portion de la structure à un instant particulier à partir de la réduction estimée de l'épaisseur de la portion de la structure audit instant particulier.

**5.** Procédé selon la revendication 4, dans lequel l'estimation du taux de réduction d'épaisseur de la portion de la structure à un instant particulier comprend l'étape consistant à appliquer une fonction LOWESS à des valeurs estimées de la réduction d'épaisseur de la portion de la structure.

**6.** Procédé selon l'une quelconque des revendications précédentes, dans lequel la première et la seconde sonde (1, 2) sont introduites dans l'eau au même moment.

**7.** Procédé selon l'une quelconque des revendications précédentes, dans lequel la valeur du courant électrique traversant la première épaisseur est invariable avec la corrosion de la première épaisseur.

**8.** Procédé selon la revendication 7, dans lequel le courant électrique traversant la seconde épaisseur a la même valeur que le courant électrique traversant la première épaisseur.

**9.** Procédé selon l'une quelconque des revendications précédentes, comprenant les étapes consistant à :

- si la résistance électrique de la première sonde (1) est inférieure à la première valeur prédéfinie (V1) :

o mesurer une température de la première sonde (1), et
o ajuster l'estimation de la réduction de l'épaisseur de la portion de la structure en utilisant la température mesurée et une relation entre la température de la première sonde (1) et un paramètre électrique de la première sonde (1) ; et

- si la résistance électrique de la première sonde (1) est supérieure à la première valeur prédéfinie (V1) :

∘ mesurer une température de la seconde sonde (2), et
∘ ajuster l'estimation de la réduction de l'épaisseur de la portion de la structure en utilisant la température mesurée et une relation entre la température de la seconde sonde (2) et un paramètre électrique de la seconde sonde (2).

**10.** Procédé selon la revendication 9, dans lequel la relation entre la température de l'une des sondes (1, 2) et un paramètre électrique de la sonde est définie par les étapes consistant à :

- avant d'introduire la sonde dans l'eau, fournir la sonde dans une chambre ayant 0 % d'humidité relative, la chambre ayant une température réglable ;
- régler la température de la chambre et mesurer une résistivité électrique de la sonde à différentes températures de la sonde.

**11.** Procédé selon l'une quelconque des revendications 9 et 10, dans lequel la relation entre la température de l'une des sondes (1, 2) et un paramètre électrique de la sonde est :

$$\rho = E0 + F0xT + G0xT^2$$

où

$\rho$ est une résistivité électrique estimée de la sonde à une température T ;
*E0, F0* et *G0* sont des valeurs constantes ; et
T est une température de la sonde.

**12.** Procédé selon l'une quelconque des revendications 9 à 11, dans lequel la réduction de l'épaisseur de la portion de la structure est estimée en utilisant :

$$th(t) = \sqrt{-\frac{bxc - Rcorr(t)xb + a}{c - Rcorr(t)}}$$

où

th(t) est une épaisseur estimée de la couche du premier matériau de l'une des sondes à l'instant t ;
a, b et c sont des valeurs constantes pour la sonde ; et
Rcorr(t) est une valeur de la résistance électrique de la sonde à l'instant t ou une valeur résultant de l'ajustement de la valeur de la résistance électrique de la sonde à l'instant t par utilisation d'une température de la sonde à l'instant t et d'une relation entre la température de la sonde et un paramètre électrique de la sonde selon l'une quelconque des revendications 9 à 11.

13. Procédé selon l'une quelconque des revendications précédentes, comprenant la conception de la première sonde par :

- l'estimation d'un taux de réduction d'épaisseur du premier matériau dans l'eau ;
- la détermination d'une variation minimale de résistance électrique détectable ;
- l'utilisation du taux de réduction d'épaisseur estimé pour déterminer une valeur de réduction minimale d'épaisseur du premier matériau ;
- la détermination des dimensions de la première sonde de telle sorte qu'une réduction de la première épaisseur du premier matériau de la première sonde égale à la réduction minimale d'épaisseur provoque une variation de résistance électrique de la sonde au moins égale à la variation minimale de résistance électrique.

14. Procédé selon l'une quelconque des revendications précédentes, dans lequel la structure est une chaîne d'amarrage.

**FIG. 1A**

**FIG. 1B**

**FIG. 2**

FIG. 3

FIG. 4

Water

Structure material

Geometry of the portion of the structure

Capacity of the electronics for taking an electrical measurement

Step 501
Estimation of thickness reduction rate in the first year

Step 502
Estimation of electrical conductivity at ambient temperature

Step 503
Determination of the minimum variation of resistance detectable with the electronics

Step 505
Calculation of the minimum rate of thickness reduction to be detected

Step 504
Selection of the geometry of the probe for achieving detection of a minimum reduction of thickness at ambient temperature

**FIG. 5**

Step 506
Calculation of the change of electrical resistance of the probe for the selected geometry at ambient temperature

Step 507
Are they compatible?

yes

no

Step 508
Calculation of the expected operation life of the probe

Step 509
Optimization of the geometry of the probe

Step 510
Is the expected lifetime long enough?

no

yes

Final geometry

**FIG. 6**

**FIG. 7**

Step 801
Measuring electrical
resistance of a probe

Step 802
Measuring temperature of
the probe

Step 703

Step 804
Estimating a reduction of a
thickness of a portion of a
structure

Step 803
Adjusting the measured
electrical resistance using
the measured temperature

Step 805
Calculating a corrosion
penetration from the
estimated thickness
reduction

Step 806
Applying a LOWESS function

Step 807
Calculating a corrosion
penetration rate from the
corrosion penetration
values

FIG. 8

**EP 4 291 871 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7034553 B2
- EP 1546679 B1
- US 2019224510 A1